# EUROPÄISCHE PATENTSCHRIFT

(11) **EP 0 609 679 B1**
(45) Veröffentlichungstag und Bekanntmachung des Hinweises auf die Patenterteilung: **28.08.1996**
(21) Anmeldenummer: 94100474.9
(22) Anmeldetag: 14.01.1994
(51) Int. Cl.: H02K 3/50

(54) **Vorrichtung zur Halterung der Windungsenden einer Statorwicklung in einer dynamoelektrischen Maschine**
Device for supporting the winding ends of a stator winding in a dynamo-electric machine
Dispositif de support des spires terminales d'un enroulement statorique dans une machine dynamo-électrique

(30) Priorität: 03.02.1993 DE 4302989
(43) Veröffentlichungstag der Anmeldung: 10.08.1994
(73) Patentinhaber: ABB Management AG, CH-5401 Baden (CH)
(72) Erfinder: Huber, Albert, CH-5115 Möriken (CH)

(56) Entgegenhaltungen:
- EP-A- 0 432 720
- DE-A- 1 538 807
- DE-A- 1 563 039
- DE-A- 2 554 839
- DE-C- 1 015 914
- US-A- 3 435 517
- US-A- 4 016 443

## Beschreibung

### TECHNISCHES GEBIET

Die Erfindung bezieht sich auf eine Vorrichtung zur Halterung der Windungsenden einer Statorwicklung in einer dynamolelektrischen Maschine, umfassend einen Rotor und einen Stator, welcher Stator einen Blechkörper mit endseitigen Statorpressplatten und ein diesen Blechkörper umgebendes Statorgehäuse aufweist und im Blechkörper in Nuten eine Statorwicklung angeordnet ist, deren Enden den Blechkörper axial überragen, welche Halterung einen Innenring, der sich unmittelbar oder unter Einschaltung einer Zwischenlage an die sich hohlkegelartig erweiternden Windungsenden der Statorwicklung anschmiegt, eine Aussenabstützung und Mittel zur Verspannung des Innenrings mit der Aussenabstützung aufweist, wobei die Mittel zur Verspannung sich an der Stirnseite des Blechörpers und/oder am Statorgehäuse abstützen.

Die Erfindung nimmt dabei Bezug auf einen Stand der Technik, wie er sich beispielsweise aus der EP-A-0 432 720 ergibt.

### TECHNOLOGISCHER HINTERGRUND UND STAND DER TECHNIK

Die Befestigung der Wicklungsenden der Statorwicklungen (Wickelkopf) von Turbogeneratoren stellt infolge der grossen Beanspruchungen, welchen diese Wickelköpfe ausgesetzt sind, gewisse Probleme. Diese Beanspruchungen haben ihre Ursache in elektromagnetischen Kraftwirkungen, insbesondere bei Kurzschluss, in Schwingungserscheinungen und in unterschiedlichen Wärmedehnungen der Statorstäbe gegenüber dem Statoreisen während des Betriebes. Diese Belastungen führen früher oder später zu Lockerungen und Abrieberscheinungen, die schlussendlich zu Erd- und Kurzschlüssen führen.

Zur Verbesserung der Festigkeit der Wickelköpfe von grossen elektrischen Maschinen wurde eine Reihe von Systemen eingeführt, die mehrheitlich mit einteiligen Ringen aus Isoliermaterial als zentralem Abstützelement arbeiten.

Bei der Vorrichtung zur Halterung der Windungsenden einer Statorwicklung in einer elektrischen Maschine nach der DE-OS 16 13 125 schmiegt sich ein Aussenring von aussen an einen Teil der äusseren Lagen der Windungsenden an. Ein Innenring, der unabhängig vom Aussenring ist, greift an die inneren Lagen der Windungsenden an. Um die gegenseitige axiale Verschiebung der beiden Ringe zu unterbinden, sind als C-förmige Bügel ausgebildete Vorrichtungen , welche die Windungsenden umgreifen, zur Verbindung der beiden Bügel vorgesehen. Die beiden Ringe sind mit axial verlaufenden Halterungen verschraubt, die ihrerseits an der Stirnseite des Statorblechkörpers befestigt sind.

Bei der axial beweglichen und radial fixierten Wickelkopfhalterung für die Statorwicklung eines Turbogenerators nach der DE-AS 14 63 796 sind die Wickelköpfe mittels Keilen und Zwischenstücken distanziert und zwischen zwei konzentrischen Isolierringen festgehalten. Dabei ist der äussere Isolierring gegenüber Gehäuseteile in radialer Richtung über Gleitkeile, die bei Wärmedehnung des Wickelkopfes eine axiale Verschiebung des äusseren Isolieringes gestatten, festgelegt und mit dem Statorgehäuse über elastische Teile verbunden.

Die Wickelkopfhalterung nach der US-PS 48 00 314 entspricht im grossen und ganzen derjenigen nach der DE-AS 14 63 796, verwendet jedoch nur einen Aussenring. Die Wickelkopfenden sind gruppenweise unter sich verkeilt und verklebt und an diesen Aussenring mittels Bändern angebunden.

Die im vorstehenden vorgestellten Ausführungsformen von Wickelkopfabstützungen haben sich in der Praxis weitgehend bewährt. Es haftet ihnen jedoch der Nachteil an, dass bei Revisionsarbeiten und insbesondere im Rahmen des Retrofit (Auswechseln/Reparieren von systemkritischen Teilen zwecks Erhöhung der Lebensdauer und/oder Leistung) aufwendige Demontagen und Abänderungen durchgeführt werden müssen. So ist es oft unumgänglich, den äusseren einstückigen Abstützungring zu zerstören, um ihn überhaupt abnehmen zu können. Aufgrund der örtlichen Gegebenheiten ist es dann nicht mehr möglich, im Rahmen des Retrofit einen neuen einteiligen Aussenring einzubauen.

Zur Umgehung der geschilderten Schwierigkeiten wird in der US-A-4,563,607 ein Abstützsystem vorgeschlagen, das sowohl bei Neukonstruktionen als auch im Rahmen des Retrofit appliziert werden kann. Dort werden jeweils zwei benachbarte Unter- und Oberstäbe im Wickelkopf durch Spannelemente aus kunstharzgetränkter Glaskordel miteinander verbunden.

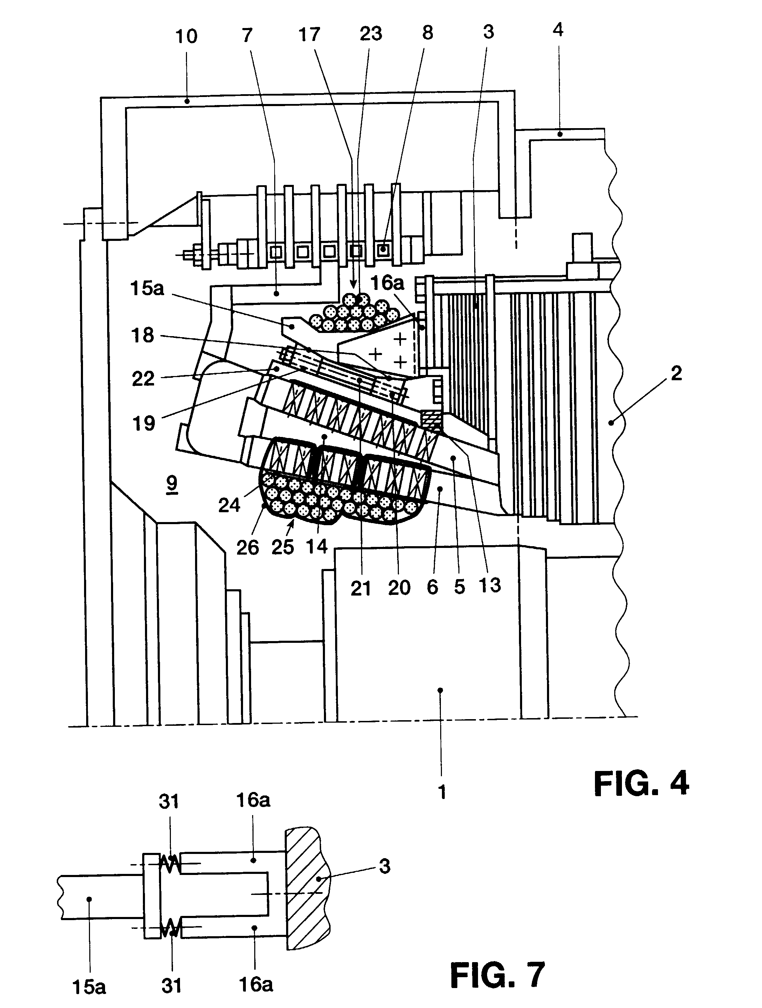

Eine weitere, insbesondere für das Retrofit vorgesehen Lösung des Abstützproblemes ist Gegenstand der US-A-5,140,740 bzw. der inhaltsgleichen Ep-A-0 432 720. Die dort vorgeschlagene Halterung weist einen Innenring auf, der sich an die sich hohlkegelartig erweiternden Windungsenden der Statorwicklung anschmiegt. Die Aussenabstützung besteht aus einem mindestens zweiteiligen Ring oder in Umfangsrichtung verlaufenden und untereinander verbundenen Abstützbalken. Zuganker, die am Innenring und Aussenring bzw. den Abstützbalken angreifen, dienen zur Verspannung von Innenring und Aussenabstützung. Alternativ können beim Bekannten der Aussenring und die Zuganker entfallen (Fig.4). Dann stützt sich der Innenring samt den Stirnbügeln des Wickelkopfes unter Zwischenschaltung von Spannkeilen an Winkeln ab, die an der Stirnseite des Statorblechkörpers befestigt sind.

Nachteilig ist bei der ersten Alternative dieser Konstruktion, dass sie viel Aufwand auf der Verbindungsseite (NS) der Maschine erfordert. Bei der Alternative ohne Aussenring bzw. ohne Abstützbalken können unzulässig hohe Zugspannungen auf den (aus Blechen geschichteten) Statorblechkörper auftreten.

### KURZE DARSTELLUNG DER ERFINDUNG

Ausgehend vom Stand der Technik liegt der Erfindung die Aufgabe zugrunde, eine Halterung der eingang genannten Gattung zu schaffen, die wirtschaftlich und einfach herstellbar ist und allen Betriebsbeanspruchungen der genannten Art zuverlässig standhält. Die Halterung soll darüber hinaus bei Service- und Instandhaltungarbeiten und insbesondere im Rahmen von Retrofit-Arbeiten sowohl leicht zu montieren und ebenso einfach wieder zu entfernen sein.

Diese Aufgabe wird erfindungsgemäss dadurch gelöst, dass zumindest am verbindungsseitigen Ende der Maschine die Aussenabstützung im wesentlichen aus einem kunstharzgetränkten Kordelring besteht, der im plastisch verformbaren Zustand auf die Windungsenden in mehreren fortlaufenden Windungen aus Kordel aufgewickelt ist und das Kunstharz erst nach dem Aufbringen des Kordelrings ausgehärtet worden ist .

Der Vorteil der Erfindung ist insbesondere darin zu sehen, dass der Kordelring ohne Demontage der Schaltverbindungen aufgebracht werden kann. Er passt sich quasi selbsttätig den vorhandenen Raumgegebenheiten an. Sein Platzbedarf ist sehr klein. Die gute Zugänglichkeit der Verspannung von Innen- und Aussenring ist gewährleistet, ebenso die Möglichkeit, die gesamte Halterung ohne grossen Aufwand nachzuspannen oder sie wieder durch Zerstörung des Kordelrings zu entfernen.

Ausführungsbeispiele der Erfindung sowie die damit erzielbaren Vorteile werden nachfolgend anhand der Zeichnung näher erläutert.

### KURZE BESCHREIBUNG DER ZEICHNUNG

In der Zeichnung sind Ausführungsbeispiele der Erfindung schematisch dargestellt, und zwar zeigt:
- Fig.1: Einen vereinfachten Längsschnitt durch die NS-Endpartie eines bekannten Turbogenerators mit einem massiven Innenring und einem massiven Aussenring, der sich an der Statorpressplatte abstützt;
- Fig.2: ein erstes Ausführungsbeispiel der Erfindung in Gestalt eines vereinfachten Längsschnitts durch die NS-Endpartie eines Turbogenerators mit einem massiven Innenring und einem Kordelring als Aussenabstützung, der sich an der Statorpressplatte abstützt;
- Fig.3: einen teilweisen Längsschnitt durch den Kordelring gemäss Fig.2;
- Fig.4: ein zweites Ausführungsbeispiel der Erfindung in Gestalt eines vereinfachten Längsschnitts durch die NS-Endpartie eines Turbogenerators mit einem aus Kordeln aufgebauten Innenring und einem Kordelring als Aussenabstützung;
- Fig.5: ein drittes Ausführungsbeispiel der Erfindung in Gestalt eines vereinfachten Längsschnitts durch die AS-Endpartie eines Turbogenerators mit einem aus Kordel aufgebauten Innenring und einem Kordelring als Aussenabstützung, der sich axial elastisch am Statorgehäuse abstützt;
- Fig.6: einen Ausschnitt auf eine Draufsicht auf die axial flexible Wickelkopfabstützung auf der AS-Seite;
- Fig.7: eine Draufsicht auf eine axial flexible Befestigung der den Kordelring tragenden Anstützbalken an der Statorpressplatte.

### WEGE ZUR AUSFÜHRUNG DER ERFINDUNG

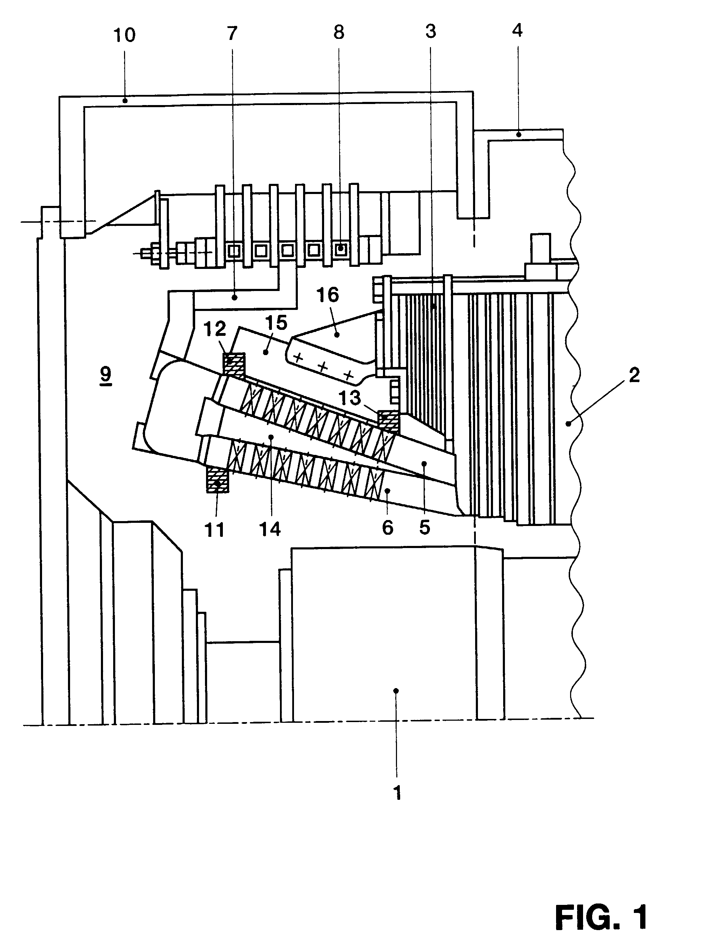

Im vereinfachten Längsschnitt durch die Verbindungsseite - in der Regel die nicht-antriebsseitige Endpartie (NS-Seite oder Erregerseite) - eines bekannten Turbogenerators gemäss Fig.1 ist mit ber Bezugsziffer 1 ein Rotor, mit 2 ein Statorblechkörper, mit 3 seine lamellierte Pressplatte und mit 4 ein den Statorblechkörper 2 umgebendes Gehäuse bezeichnet. Die Statorwicklung besteht aus einem Unterstab 5 und einem Oberstab 6, deren aus dem Statorblechkörper 2 herausragende Enden, die sogenannten Stirnbügel, miteinander elektrisch und mechanisch verbunden sind. Die Gesamtheit aller Stirnbügel bildet den Wickelkopf. Leitungsverbinder 7 führen von den Stirnbügeln zu Ringleitungen 8 im Wickelkopfraum 9, der im Beispielsfall von einem eigenen Wickelkopfgehäuse 10 umgeben ist. Dieses Gehäuse 10 ist gasdicht am Statorgehäuse 4 befestigt, z.B. angeschraubt. Das Statorgehäuse 4 kann aber auch einstückig mit dem besagten Wickelkopfgehäuse 10 ausgebildet sein. Aus diesem Grunde wird nachstehend nur allgemein vom Maschinengehäuse gesprochen.

Die Abstützung des Wickelkopfes erfolgt mit einem massiven Innenring 11 aus glasfaserverstärktem Kunstharz, dessen Aussenfläche den sich erweiternden Stirnbügeln angepasst ist, und zwei massiven, einteiligen Aussenringen 12 und 13 aus dem gleichen Material. Zwischen Unterstab 5 und Oberstab 6 ist ein keilförmiges Füllstück 14 aus Isoliermaterial eingelegt. Die beiden Aussenringe 12, 13 greifen in Ausnehmungen eines axial verlaufenden Stützbalkens 15 ein. Dieser ist an einen Befestigungswinkel 16 angeschraubt, der wiederum an der Statorpressplatte 3 befestigt ist.

Die beiden Aussenringe 12, 13 müssen bereits vor dem Einbau der Statorwicklung montiert sein und können auch nicht zerstörungsfrei entfernt werden, so dass bei einer Reparatur der Statorwicklung oder ähnlichen Arbeiten eine andere Art der Wickelkopfabstützung eingesetzt werden muss. Die eigentliche Verspannung und Verfestigung des Wickelkopfes erfolgt durch Einpressen des inneren Ringes 11 in den sich konisch verjüngenden Wicklungskorb, der durch die Oberstäbe 6 gebildet ist, und anschliessende axiale Sicherung des inneren Ringes 11.

Wie ein Blick auf die Fig.1 deutlich zeigt, herrschen im Wickelkopfraum 9 auf der Verbindungsseite (NS-Seite) sehr beengte Platzverhältnisse. Selbst wenn der äussere Ring 12 über den Wickelkopf axial abziehbar wäre, müssten doch zumindest die zahlreichen Leitungsverbinder 7 entfernt werden.

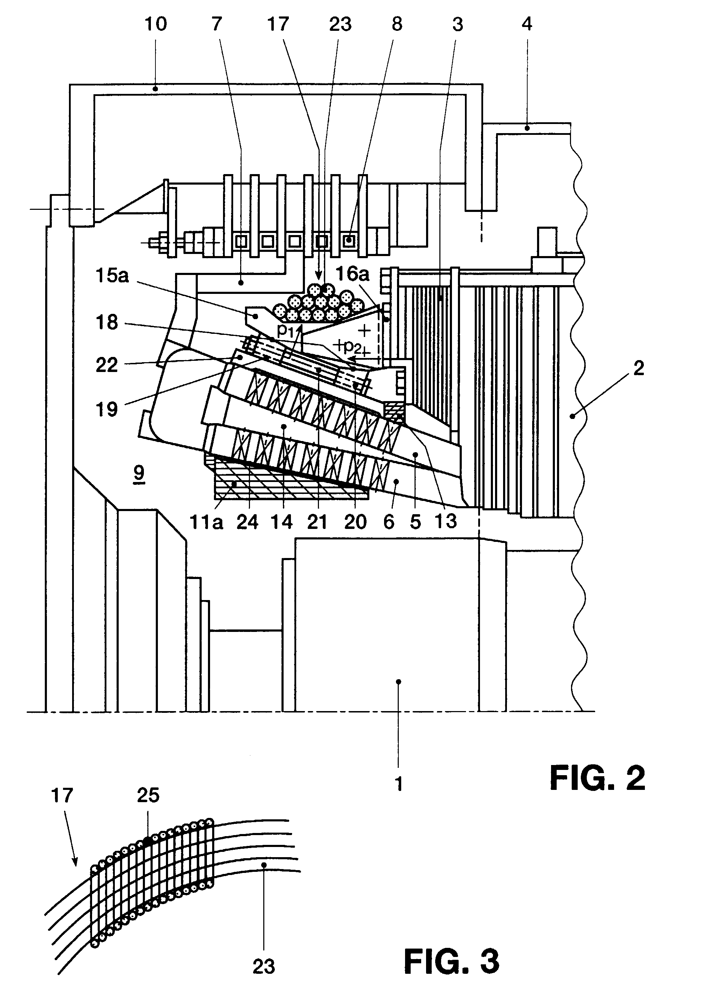

Hier setzt nun die Erfindung ein, die unter Bezugnahme auf die Fig.2 und 3 näher erläutert wird. In Fig.2 bzw. 3 sind gleiche oder gleichwirkende Teile mit denselben Bezugsziffern versehen wie in Fig.1.

Bei einer Reparatur oder im Rahmen des Retrofit wird der innere Ring 11 und der äussere Ring 12 entfernt. Die Befestigungswinkel 16 mitsamt den Stützblaken 15 werden abgeschraubt. An ihre Stelle treten gemäss Fig.2 axial weniger weit ausladende Befestigungswinkel 16a, an die modifizierte Stützbalken 15a angeschraubt werden. Diese modifizierten Stützbalken 15a weisen radial aussen eine runde Ausnehmung zur Aufnahme eines Kordelrings 17 auf und können auch in Umfangsrichtung an die Geometrie des Kordelrings 17 angepasst sein. Die dem Unterstab 5 zugewandte Fläche des modifizierten Stützbalkens 15a verläuft im mittleren Abschnitt etwa parallel zum Unterstab 5 und geht im Randbereich in je eine Keilfläche 18 über. Diese beiden Keilflächen 18 wirken mit einer Doppelkeilanordnung 19, 20, die mittels Schraubbolzen 21 gegeneinander verspannbar ist. Um den Anpressdruck auf den Unterstab 5 gleichmässig zu verteilen, ist zwischen der Doppelkeilanordnung 19,20 und dem Unterstab 5 eine Unterlage 22 aus Isolierstoff und zwischen dieser und dem Unterstab 5 eine Glasvliesmatte 24 zum Schutz der Wicklung vorgesehen.

An die Stelle des inneren Ringes 11 der Fig.1 tritt ein einstückiger Innenring 11a mit grösserer Querschnittsfläche aus glasfaserverstärkten Kunstharz. Seine radial äussere Fläche ist der Konizität des Wickelkopfes angepasst.

Der Kordelring 15a besteht aus Kordeln oder Lunten 23, die um die modifizierten Stützbalken 15a in vielen Windungen fortlaufend herumgewickelt sind. Dabei kommen vorzugsweise Glasfaser-Kordeln zur Verwendung, wie seit Jahren zur Fixierung und Distanzierung der Leiter und Spulen von Wickelköpfen elektrischer Maschinen verwendet werden und beispielsweise in der CH-A-425 983 beschrieben sind. Solche Kordeln weisen eine Seele aus in Kordellängsrichtung verlaufenden Glasfasern auf, die von einer elastischen Umhüllung oder Geflecht umgeben sind. Diese Umhüllung kann - muss aber nicht nach dem Aufwickeln entfernt werden. Neben Glasfaserkordel kommen aber auch solche aus Kevlar in Frage. Die Kordeln werden entweder trocken eingezogen und aufgewickelt und danach mit einem Kunstharz imprägniert, das anschliessend ausgehärtet wird, oder die Kordeln 23 sind vorgängig mit einem Kunstharz im B-Zustand imprägniert, das nach dem Aufwicklen unter Wärme ausgehärtet wird.

Bei der ersten Variante erfolgt das Einbringen des Tränkharzes, vorzugsweise ein Epoxid-Harz, durch Injektion, wobei die Struktur der Glasfasern im Inneren der Lunte wegen der Kapillarwirkung eine gleichmässige Durchtränkung bewirkt. Optional kann der Kordelring 17 noch durch eine Bandage aus gleichartig aufgebauten Kordeln oder Lunten 25 verstärkt werden (Fig.3).

Der Kordelring 17 steht im ausgehärteten Zustand einem massiven Ring aus glasfaserverstärktem Kunstharz in Bezug auf Festigkeit und Elastizität nur wenig nach. Er lässt sich - Gegensatz zu einem mehrteiligen Ring - auch unter beschränkten Platzverhältnissen anbringen.

Nach der endgültigen Aushärtung des Kordelrings 17 wird bei eingelegter Doppelkeilanordnung 19, 20 der innere Ring 11a eingepresst und auf geeignete Weise axial gesichert. Eine Gleitunterlage 24, z.B. in Form einer Glasvliesmatte, schützt dabei den Oberstab 6 gegen mechanische Beschädigungen. Die eigentliche Verspannung erfolgt hingegen durch Anziehen der Schraubbolzen 21.

Die im vorstehenden beschriebene Abstützung des Wickelkopfes mit innerem Ring 11a und (äusserem) Kordelring 17 und der Doppelkeilanordnung 19,20 verhindert Zugkräfte auf den radial innenliegenden Abschnitt der Statorpressplatte 2 und den Statorblechkörper 2. Ohne den Kordelring 17 wirkt infolge der radial wirkenden Spannkraft P₁ und der Hebelwirkung von Stützbalken 15a und Befestigungswinkel 16a eine Zugbeanspruchung P₂ auf den Statorblechkörper. Derartige Zugkräfte führen zur Lockerung des Blechkörpers und können in Folge die Isolation der Statorwicklung im Bereich des Blechkörperendes beschädigen. Der Kordelring 17 verhindert diese Hebelwirkung, indem er die Radialkraft P₁ auffängt.

Die Ausführungsform gemäss Fig.4 unterscheidet sich von derjenigen nach Fig.3 im wesentlichen darin, dass an die Stelle eines massiven inneren Rings 11a ebenfalls ein Kordelring 25 tritt. Dieser weist denselben Aufbau auf wie der äussere Kordelring 17, besteht also aus kunstharzgetränkten Lunten oder Kordeln 23. Diese werden auf eine Art Lehre oder Form ausserhalb der Maschine aufgewickelt und nach Einbringen in den Innenraum des Wickelkopfes unter Anwendung von Druck und Wärme zu einem Ring gepresst, der sich vollkommen an die Oberstäbe 6 anschmiegt. Analog zur Ausführungsform nach Fig.2 sind zwischen dem inneren Kordelring 25 und den Stirnbügeln 6 Unterlagen 24 aus Glasmatte vorgesehen, welche bei Aushärten sowohl mit dem inneren Kordelring 25 als auch mit den Stirnbügeln 6 verklebt. Nach dem Aushärten kann der innere Kordel ring 25 durch Bandagen 26 zusätzlich axial gesichert werden.

Die weitere Montage vollzieht sich analog der Vorgehensweise, wie sie im Zusammenhang mit Fig.2 geschildert wurde. Nach den Aushärten des inneren Kordelrings 25 wird der äussere Kordelring 17 aufgebracht. Nach Aushärten desselben wird über die Doppelkeilanordnung 19, 20 mittels der Schraubbolzen 21 der aus innerem Kordelring 25, Stirnbügel und äusserem Kordelring 17 bestehende Wickelkopfverband verspannt.

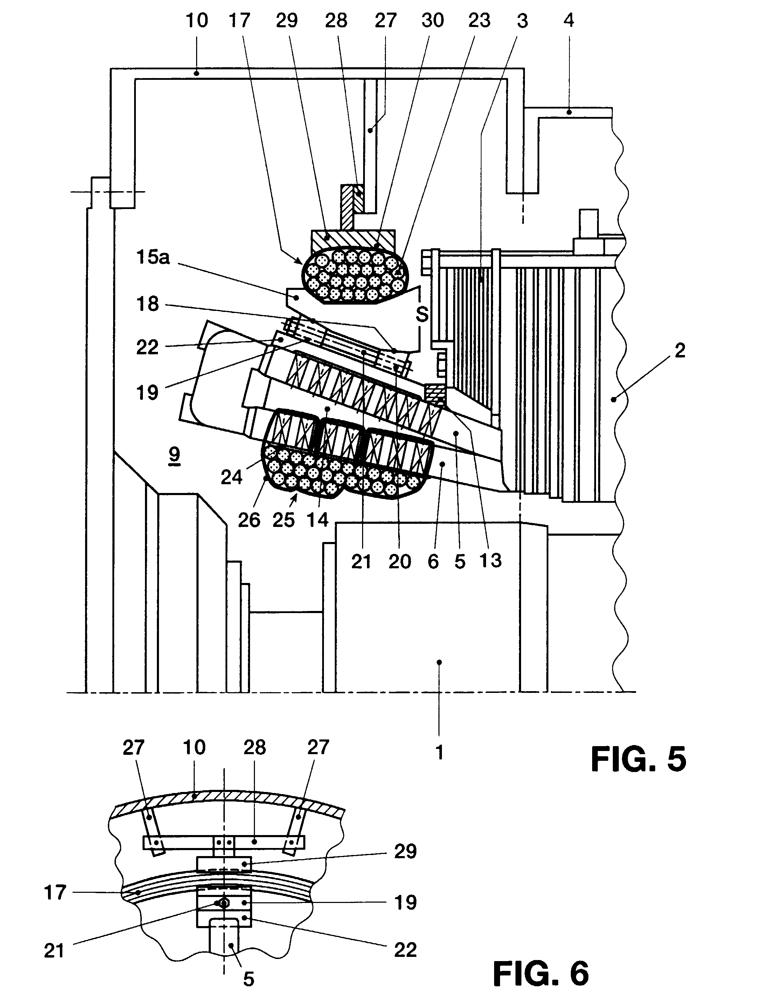

Die im vorstehenden aufgezeigte Abstützung des Wickelkopfes eignet sich insbesondere für die Verbindungsseite (NS-Seite) grosser elektrischer Maschinen, weil nur die Kordeltechnik die Möglichkeit bietet, den äusseren Ring 17 optimal den vorhandenen Raumgegebenheiten anpassen zu können, und sich deshalb eine extrem aufwendige Demontage und Aenderung der Ringverbindungen und der Ableitungen erübrigt. Obwohl auf der Nicht-Verbindungsseite, regelmässig AS- oder Turbinenseite, weniger beengte Platzverhältnisse herrschen, lassen sich auch dort der innere und/oder auch der äussere Ring als Kordelring ausführen. Dies ist in Fig.5 beispielsweise verdeutlicht.

In Fig.5, in der alle gleichen oder gleichwirkenden Teile mit denselben Bezugszeichen wie in den vorangegangenen Figuren versehen sind, ist der innere Ring eine Kordelring 25, der äussere ebenfalls ein Kordelring 17. Neu gegenüber den in den Figuren 2 und 4 dargestellten Ausführungen ist die starre radiale Abstützung des gesamten AS-Wickelkopfes gegenüber dem Gehäuse 10, während die axiale Abstützung flexibel gestaltet ist. Die Begründung für diese Eigenschaft wird weiter unten näher erläutert. Diese beiden Abstützfunktionen übernehmen radial nach innen weisende Streben 27, die am Wickelkopfgehäuse 10 befestigt sind. Zwischen diesen Streben 27 sind axial flexible azimutal verlaufende Blattfedern 28 befestigt, an denen im mittigen Abschnitt eine T-förmige Auflage 29 befestigt ist, wie aus der Draufsicht gemäss Fig.6 hervorgeht. Die radial innenliegende Fläche 30 der Auflagen 29 ist sowohl in Umfangsrichtung als auch axial konkav gekrümmt und dient als Widerlager für den Kordelring 17.

Die Streben 27 können alternativ selbst als Blattfedern ausgebildet sein. In diesem Fall sind die T-förmigen Auflagen 29 direkt an den Streben befestigt (nicht dargestellt). Sowohl im dargestellte Fall als auch bei der genannten Alternative entfallen die Befestigungswinkel (Position 16a in Fig.2 und 4), und es verbleibt ein Spalt S zwischen dem Stützbalken 15a und der Stirnseite der Statorpressplatte 3.

Eine weitere Möglichkeit einer axial flexiblen Aussenabstützung des Wicklekopfes besteht darin, diesen nicht am Wickelkopfgehäuse 10, sondern an der Statorpressplatte 3 axial flexibel abzustützen. Bei dieser Variante entfallen die Streben 27, Blattfedern 28 und T-förmigen Auflagen 29. Analog Fig.2 und 4 sind dann Abstützwinkel 16a und Stützbalken 15a vorzusehen, wobei jedoch die genannten Teile 15a und 16a nicht fest sondern mit zwischengeschalteten axial wirkenden Federelementen, z.B. Federscheiben oder Tellerfedern 31, wie aus dem Schnitt gemäss Fig.7 zu erkennen ist miteinander verbunden sind, die eine Relativbewegung zwischen Wickelkopf und Statorpressplatte 3 ermöglichen.

Die Kühlung der Statorwicklung und des Statorblechkörpers bei den hier betrachteten grossen elektrischen Maschinen erfolgt normalerweise mit Wasserstoff oder Wasser. Dabei wird das Kühlmittel von der Erregerseite (NS-Seite) zugeführt, durchströmt den Wicklungsstab durch Hohlleiter und tritt an der Turbinenseite (AS-Seite) wieder aus. Dies hat zur Folge, dass die Ausdehnung des erregerseitigen Wickelkopfes und praktisch der ersten Hälfte des Aktivteiles sich gegenüber dem Blechkörper wenig ändert. Die grösseren thermischen Dehnungen relativ zum Blechkörper erfolgen vorwiegend im Statorwicklungsstab und im Wickelkopf auf der Turbinenseite.

Basierend auf dieser Tatsache ist die Wicklekopfabstützung auf der Turbinenseite axial flexibel (Ausnahme bei Maschinen mit kleiner Eisenlänge), auf der Erregerseite (Verbindungsseite, NS-Seite) kann hingegen eine feste Wickelkopfabstützung verwendet werden, wie es in den Figuren 2 und 4 veranschaulicht ist. Im Bedarfsfall lässt sich jedoch auch dort und mit vergleichsweise wenig Aufwand eine axial flexible Abstützung gemäss Fig.7 realisieren.

### Bezeichnungsliste

- 1: Rotor
- 2: Statorblechkörper
- 3: lamellierte Pressplatte
- 4: Statorgehäuse
- 5: Unterstab
- 6: Oberstab
- 7: Leitungsverbinder
- 8: Ringleitungen
- 9: Wickelkopfraum
- 10: Wickelkopfgehäuse
- 11,11a: massiver Innenring
- 12,13: massive Aussenringe
- 14: keilförmiges Füllstück
- 15,15a: Stützbalken
- 16,16a: Befestigungswinkel
- 17: äusserer Kordelring
- 18: Keilflächen an 15a
- 19,20: Doppelkeilanordnung
- 21: Schraubbolzen
- 22: Unterlage aus Isolierstoff
- 23: Lunten
- 24: Glasfaservlies,Gleitunterlage
- 25: innerer Kordelring
- 26: Bandagen
- 27: radiale Streben
- 28: Blattfedern
- 29: T-förmige Auflage
- 30: konkave Auflagefläche
- 31: Federscheiben

## Patentansprüche

1. Vorrichtung zur Halterung der Windungsenden einer Statorwicklung in einer dynamolelektrischen Maschine, umfassend einen Rotor (1) und einen Stator, welcher Stator einen Blechkörper (2) mit endseitigen Statorpressplatten (3) und ein diesen Blechkörper umgebendes Statorgehäuse (4) aufweist und im Blechkörper (2) in Nuten eine Statorwicklung (5,6) angeordnet ist, deren Enden den Blechkörper axial überragen, welche Halterung einen Innenring (11a;25) aufweist, der sich unmittelbar oder unter Einschaltung einer Zwischenlage (24) an die sich hohlkegelartig erweiternden Windungsenden der Statorwicklung anschmiegt, eine Aussenabstützung (17) und Mittel (19,20,21) zur Verspannung des Innenrings (11a;25) mit der Aussenabstützung aufweist, wobei die Mittel zur Verspannung sich an der Stirnseite des Blechkörpers und/oder am Gehäuse abstützen, dadurch gekennzeichnet, dass die Aussenabstützung am verbindungsseitigen Ende der Maschine im wesentlichen aus einem kunstharzgetränkten Kordelring (17) besteht, der im plastisch verformbaren Zustand auf die Windungsenden in mehreren fortlaufenden Windungen aus Kordel aufgewickelt ist und das Kunstharz erst nach dem Aufbringen des Kordelrings ausgehärtet worden ist.

2. Vorrichtung nach Anspruch 1, dadurch gekennzeichnet, dass der Kordelring (17) aus mehreren Windungen Kordel (23) besteht, die eine Seele aus Glas- oder Kevlerfasern aufweist und zumindest während der Montage von einer elastischen oder nachgiebigen Hülle umgeben sind.

3. Vorrichtung nach Anspruch 1 oder 2, dadurch gekennzeichnet, dass der Kordelring (17) auf Stützbalken (15a) aufliegt, die vorzugsweise an der Statorpressplatte (3) befestigt sind.

4. Vorrichtung nach einem der Ansprüuche 1 bis 3, dadurch gekennzeichnet, dass der Kordelring (17) vorzugsweise auf dem nichtverbindungsseitigen Ende der Maschine radial steif und axial flexibel gegenüber dem Statorgehäuse (10) oder der Statorpressplatte (3) abgestützt ist.

5. Vorrichtung nach Anspruch 4, dadurch gekennzeichnet, dass zur Abstützung des Kordelrings (17) am Gehäuse (10) radial nach innen gerichtete Streben (27) vorgesehen sind, die am freien Ende mit Auflagen (29) versehen sind, an denen der Kordelring (17) aussen anliegt.

6. Vorrichtung nach Anspruch 4, dadurch gekennzeichnet, dass zur Abstützung des Kordelrings (17) am Gehäuse (10) radial nach innen gerichtete Streben (27) vorgesehen, an denen eine azimutal verlaufende, in axialer Richtung elastische Blattfeder (28) befestigt ist, an welcher wiederum Auflagen (29) vorgesehen sind, an denen der Kordelring (17) aussen anliegt.

7. Vorrichtung nach einem der Ansprüche 1 bis 5, dadurch gekennzeichnet, dass auch den Innenring als Kordelring (11a;25) ausgebildet ist und aus mehreren Windungen Kordel (23) besteht, die eine Seele aus Glas- oder Kevlerfasern aufweist und und zumindest während der Montage von einer elastischen Hülle umgeben ist.

## Claims

1. Device for holding the ends of the turns of a stator winding in a dynamoelectric machine, comprising a rotor (1) and a stator, which stator has a laminated body (2) with stator end plates (3) at the ends and a stator housing (4) which surrounds this laminated body, and a stator winding (5, 6) is arranged in slots in the laminated body (2), the ends of which stator winding (5, 6) project axially beyond the laminated body, which holder has an inner ring (11a; 25) which closely adjoins the ends of the turns, which are extended like a hollow cone, of the stator winding directly or with the interposition of an intermediate layer (24), has an outer support (17) and means (19, 20, 21) for bracing the inner ring (11a; 25) to the outer support, the means for bracing being supported on the end of the laminated body and/or on the housing, characterized in that the outer support at the end of the machine on the connection side essentially comprises a twine ring (17) which is impregnated with synthetic resin and is wound with a plurality of continuous turns of twine onto the ends of the turns in the plastically deformable state, and the synthetic resin has not been cured until after the twine ring has been fitted.

2. Device according to Claim 1, characterized in that the twine ring (17) comprises a plurality of turns of twine (23), which has a core made of glass fibres or Kevlar fibres and is surrounded by an elastic or flexible sleeve, at least during installation.

3. Device according to Claim 1 or 2, characterized in that the twine ring (17) rests on supporting bars (15a) which are preferably attached to the stator end plate (3).

4. Device according to one of Claims 1 to 3, characterized in that the twine ring (17) is preferably supported in a radially stiff manner on the end of the machine which is not the connection side, and is supported in an axially flexible manner with respect to the stator housing (10) or the stator end plate (3).

5. Device according to Claim 4, characterized in that radially inwardly directed struts (27) are provided to support the twine ring (17) on the housing (10) and are provided at the free end with seats (29) against which the twine ring (17) rests on the outside.

6. Device according to Claim 4, characterized in that radially inwardly directed struts (27) are provided to support the twine ring (17) on the housing (10), to which struts (27) a leaf spring (28) is attached, which runs in the azimuth direction, is elastic in the axial direction and on which seats (29) are once again provided, against which the twine ring (17) rests on the outside.

7. Device according to one of Claims 1 to 5, characterized in that the inner ring is also designed as a twine ring (11a; 25) and comprises a plurality of turns of twine (23), which twine has a core made of glass fibres or Kevlar fibres and is surrounded by an elastic sleeve at least during installation.

## Revendications

1. Dispositif de support des spires terminales d'un enroulement statorique dans une machine dynamoélectrique, comprenant un rotor (1) et un stator, stator qui présente un corps feuilleté (2) avec des plaques d'extrémité de serrage du stator (3) et une enceinte de stator (4) entourant ce corps feuilleté et dans des encoches dans le corps feuilleté (2) est disposé un enroulement statorique (5, 6), dont les extrémités dépassent axialement le corps feuilleté, support qui présente un anneau intérieur (11a; 25) qui, directement ou avec interposition d'une couche intermédiaire (24), épouse la forme des spires terminales de l'enroulement statorique qui s'évasent en un cône creux, un support extérieur (17) et des moyens (19, 20, 21) pour le serrage de l'anneau intérieur (11a; 25) avec le support extérieur, dans lequel les moyens de serrage prennent appui sur la face frontale du corps feuilleté et/ou sur l'enceinte, caractérisé en ce qu'à l'extrémité de la machine du côté du raccordement, le support extérieur se compose essentiellement d'un anneau de corde imprégné de résine synthétique (17), qui est enroulé à l'état plastiquement déformable en plusieurs spires continues en corde sur les spires terminales et la résine synthétique n'a été durcie qu'après la mise en place de l'anneau de corde.

2. Dispositif suivant la revendication 1, caractérisé en ce que l'anneau de corde (17) se compose de plusieurs spires de corde (23), qui présente une âme en fibres de verre ou de Kevlar et sont entourées, au moins pendant le montage, d'une gaine élastique ou malléable.

3. Dispositif suivant la revendication 1 ou 2, caractérisé en ce que l'anneau de corde (17) repose sur des barreaux de support (15a), qui sont de préférence fixés à la plaque de serrage du stator (3).

4. Dispositif suivant l'une quelconque des revendications 1 à 3, caractérisé en ce que l'anneau de corde (17) est supporté, de préférence du côté de la machine opposé au raccordement, de façon axialement rigide et radialement flexible par rapport à l'enceinte de stator (10) ou à la plaque de serrage du stator (3).

5. Dispositif suivant la revendication 4, caractérisé en ce qu'il est prévu sur l'enceinte (10), pour le support de l'anneau de corde (17), des entretoises (27) orientées vers l'intérieur qui sont pourvues, à leur extrémité libre, d'appliques (29) sur lesquelles l'anneau de corde (17) prend appui extérieurement.

6. Dispositif suivant la revendication 4, caractérisé en ce qu'il est prévu sur l'enceinte (10), pour le support de l'anneau de corde (17), des entretoises (27) orientées vers l'intérieur auxquelles est fixé un ressort à lames (28) élastique en direction axiale, orienté en direction azimutale, sur lequel il est à nouveau prévu des appliques (29) contre lesquelles l'anneau de corde (17) s'appuie extérieurement.

7. Dispositif suivant l'une quelconque des revendications 1 à 5, caractérisé en ce que l'anneau intérieur est constitué par un anneau de corde (11a; 25) et se compose de plusieurs spires de corde (23), qui présente une âme en fibres de verre ou de Kevlar et est entouré par une gaine élastique au moins pendant le montage.
